(19) Europäisches Patentamt
European Patent Office
Office européen des brevets

(11) **EP 2 607 750 B1**

(12) **EUROPÄISCHE PATENTSCHRIFT**

(45) Veröffentlichungstag und Bekanntmachung des Hinweises auf die Patenterteilung:
**14.05.2014 Patentblatt 2014/20**

(51) Int Cl.:
***F16H 25/22*** *(2006.01)*

(21) Anmeldenummer: **12189257.4**

(22) Anmeldetag: **19.10.2012**

(54) **Planetenwälzgewindetrieb**

Planetary spindle drive

Entraînement à vis sans fin planétaire

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.12.2011 DE 102011088995**

(43) Veröffentlichungstag der Anmeldung:
**26.06.2013 Patentblatt 2013/26**

(73) Patentinhaber: **Schaeffler Technologies GmbH & Co. KG**
**91074 Herzogenaurach (DE)**

(72) Erfinder: **Rink, Thomas**
**97705 Waldfenster (DE)**

(56) Entgegenhaltungen:
**DE-A1-102009 040 606     JP-A- 2007 162 721**

**Beschreibung**

Die vorliegende Erfindung betrifft einen Planetenwälzgewindetrieb, der eine Relativdrehung zwischen Spindelmutter und Gewindespindel in eine translatorische Relativverschiebung zwischen Spindelmutter und Gewindespindel umwandelt.

Aus DE 102009040606 A1 war ein Planetenwälzgewindetrieb bekannt, der mit einer Vielzahl von über den Umfang verteilt angeordneten Planeten versehen ist, die in Wälzeingriff mit der Gewindespindel sowie der Spindelmutter stehen, wobei die Gewindespindel eine Vielzahl von schraubenförmig um die Spindelachse gewundene Windungen wenigstens einer Gewinderille aufweist. Die Spindelmutter ist an ihrem Innenumfang mit einem mutterseitigen Profil versehen, wobei das planetenseitige Profil der Planeten in Wälzeingriff mit dem mutterseitigen Profil steht. Die Planeten sind mit ringförmig geschlossenen Rillen versehen, die quer zur Planetenachse angeordnet sind. Die Planeten laufen auf Umlaufbahnen, die quer zur Spindelachse angeordnet sind.

Im Betrieb derartiger Planetenwälzgewindetriebe kann ein Schlupf zwischen Gewindespindel und Spindelmutter beobachtet werden.

Gemäß DE 102009040606 A1 ist ein für die Positionsbestimmung vorgesehenes Längenmesssystem vorgesehen, das einen fest mit der Spindelmutter verbundenen Sensor aufweist, der die Gewindespindel abtastet. Der Sensor erfasst die vorbeilaufenden Windungen der Gewinderille, wobei die Gewindespindel als Maßverkörperung zur Bestimmung einer axialen Position von Spindelmutter und Gewindespindel zueinander verwendet wird.

Für eine verbesserte Positionsbestimmung sieht DE 102009040606 A1 zusätzlich einen als Absolutwertgeber ausgebildeten Drehgeber vor, der eine absolute Winkelposition der Gewindespindel anzeigt.

Aufgabe der Erfindung war es, einen alternativen Planetenwälzgewindetrieb anzugeben, der eine Positionsbestimmung ermöglicht.

Erfindungsgemäß wurde diese Aufgabe durch den Planetenwälzgewindetrieb gemäß Anspruch 1 gelöst. Dadurch, dass die Spindelmutter an einem das Sensorelement aufweisenden Gehäuse um die Spindelachse herum drehbar gelagert ist, kann auch bei rotierender Spindelmutter eine Positionsbestimmung vorgenommen werden. Das gehäusefest angeordnete Sensorelement kann die durch die schraubenförmige Gewinderille gebildete Profilierung der Gewindespindel abtasten und vorleilaufende Windungen der Gewinderille erfassen und entsprechende Signale beispielsweise an einen Zähler weiterleiten.

Gemäß DE 102009040606 A1 ist die Spindelmutter drehfest angeordnet und die Gewindespindel wird über einen Motor in Rotation versetzt. Die Spindelmutter kann nicht gedreht werden, denn das an der Spindelmutter angebrachte Sensorelement schließt eine Rotation der Spindelmutter aus. Die erfindungsgemäße Anordnung ermöglicht eine einfaches Anbringen geeigneter Sensorelemente an das Gehäuse, so dass auch bei angetriebener Spindelmutter eine Positionsbestimmung erfolgen kann.

Die Gewindespindel kann in bekannter Weise mit einer Vielzahl von schraubenförmig um die Spindelachse gewundene Windungen wenigstens einer Gewinderille versehen sein, wobei die Gewinderille von einem Rillenboden und von Gewindeflanken begrenzt ist, die in Gewindespitzen münden. Einander benachbarte Windungen sind im Abstand der Teilung t angeordnet.

Bei einer eingängigen Gewindespindel ist die Teilung t gleich der Steigung p der Gewinderille. Bei einer mehrgängigen Gewindespindel mit mehreren Gewindegängen G ist die Teilung $t=p/G$, also gebildet durch den Quotienten aus der Steigung p zu der Gangzahl G. Erfindungsgemäße Planetenwälzgewindetriebe können eingängig oder mehrgängig ausgeführt sein.

Insbesondere magnetoresisitve Sensoren eignen sich für die Erfindung. Bei den magnetoresistiven Sensoren ist der elektrische Widerstand abhängig von dem Magnetfeld, das sie detektieren. Das detektierte Magnetfeld zeigt einen sinusförmigen Verlauf mit einem oberen und einem unteren Extremwert, die eingenommen werden, wenn der Sensor genau über einer Gewindespitze oder einem Rillenboden liegt der Gewinderille liegt. Bei den magnetoresistive Sensoren ändert sich der elektrische Widerstand des abtastenden Sensors während des Überstreichens einer Windung der Gewinderille, die von einem Rillenboden und von Gewindeflanken begrenzt ist, die in Gewindespitzen münden. Der Sensor reagiert mit sinusförmigen Änderungen seines elektrischen Widerstandes aufgrund einer Änderung des magnetischen Flusses, der abhängig ist von der Lage des Rillenbodens und der Gewindespitze in Bezug auf den Sensor. Über geeignete Messtechnik kann diese Änderung des elektrischen Widerstandes für eine verbesserte Positionsbestimmung ausgewertet werden.

Diese Eigenschaft der magnetoresistiven Sensoren kann mit sogenannten magnetisch vorgespannten Sensoren vorteilhaft genutzt werden. Bei diesen magnetisch vorgespannten Sensoren ist der Sensor an sich mit einem Stützmagneten versehen, der als Permanentmagnet ausgeführt sein kann. Wenn die magnetisierbare Gewindespindel an dem magnetisch vorgespannten Sensor vorbeigeführt wird - also Gewindespitzen und Rillenböden an dem Sensor vorbeilaufen - ändert sich aufgrund der Rillenstruktur der Gewindespindel bei jedem Wechsel von Windung zu Windung das Magnetfeld. Die Änderung des Magnetfeldes wird von dem vorgespannten Sensor als Änderung des elektrischen Widerstandes erfasst, aufgrund dessen das erfindungsgemäße Sensorelement ein Signal abgeben kann, dass eine genaue Positionsermittlung ermöglicht.

Das Gehäuse kann eine von der Gewindespindel durchdrungene Ausnehmung aufweisen, in der das Sensorelement angeordnet ist. Das Sensorlement kann als Ring ausgebildet sein, und mit einer Vielzahl von Sensoren bestückt sein, die in bekannter Weise über eine Brückenschaltung miteinander verknüpft sind. Der Ring kann koaxial zu der Gewindespindel angeordnet und in eine Gehäusebohrung oder in eine Ausnehmung des Gehäuses eingesetzt sein.

Das Sensorelement kann auch als Vorsatzelement ausgeführt sein, dass an das Gehäuse angebracht werden kann, beispielsweise über eine Flanschverbindung. Nachstehend wird die Erfindung anhand eines in fünf Figuren abgebildeten Ausführungsbeispieles näher erläutert. Es zeigen:

Figur 1      einen Längsschnitt durch einen erfindungsgemäßen Planetenwälzgewindetrieb,

Figur 2      eine Ansicht des erfindungsgemäßen Planetenwälzgewindetriebes aus Figur 1,

Figur 3      eine Detailvergrößerung aus Figur 1,

Figur 4      eine Prinzipskizze eines erfindungsgemäßen 1/10 Nonius des Planetenwälzgewindetriebes und

Figur 5      eine weitere Prinzipskizze mit gegenüber der Figur 4 verschobenem Nonius.

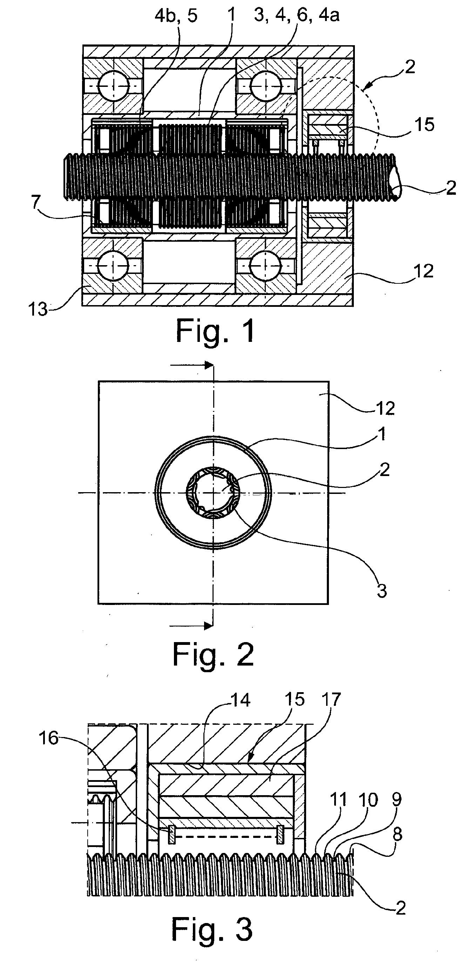

Figur 1 zeigt einen erfindungsgemäßen Planetenwälzgewindetrieb im Längsschnitt. Eine Spindelmutter 1 ist auf einer drehfest angeordneten Gewindespindel 2 drehbar angeordnet. Die Spindelmutter 1 kann über einen nicht abgebildeten motorischen Antrieb angetrieben und in Rotation versetzt werden.

Eine Vielzahl von über den Umfang der Gewindespindel 2 verteilt angeordneten Planeten 3 sind in Wälzeingriff mit der Gewindespindel 2 und der Spindelmutter 1. Die Verteilung der Planeten ist in Figur 2 zu erkennen. Die Planeten 3 laufen auf Kreisbahnen um die Spindelachse der Gewindespindel 2. Sie rotieren um ihre Planetenachse und rotieren gegenüber der Gewindespindel 2 sowie der Spindelmutter 1, wobei die Planeten 3 am Innenumfang der Spindelmutter 1 sowie am Außenumfang der Gewindespindel 2 abwälzen.

In bekannter Weise sind die Planeten 3 mit einem planetenseitigen Profil 4 versehen, das mit der Gewindespindel 2 sowie der Spindelmutter 1 kämmt. Die Planeten 3 sind an beiden Enden mit radial abgesetzten Zapfen 5 versehen, die durch ein radial erweitertes Mittelstück 6 einstückig miteinander verbunden sind. Das planetenseitige Profil 4 weist einen mittleren Profilabschnitt 4a auf, der am Außenumfang des Mittelstücks 6 angeformt ist. Der Profilabschnitt 4a kämmt mit der Gewindespindel 2. Die beiden Zapfen 5 sind an ihrem Außenumfang jeweils mit einem äußeren Profilabschnitt 4b versehen, der mit der Spindelmutter 1 kämmt. Die Profilabschnitte 4a, 4b sind durch ringförmig geschlossene, parallel zueinander angeordnete Rillen gebildet.

Die Spindelmutter 1 ist an ihrem Innenumfang an beiden axialen Enden jeweils mit einem mutterseitigen Profil 7 versehen, das mit den planetenseitigen äußeren Profilabschnitten 4b kämmt. Das mutterseitige Profil 7 ist durch ringförmig geschlossene, parallel zueinander angeordnete Rillen gebildet.

Die Gewindespindel 2 ist an ihrem Außenumfang mit einer Gewinderille 8 versehen, die aus einer Vielzahl von um die Spindelachse schraubenförmig gewundenen Windungen 9 gebildet ist. Figur 3 zeigt deutlich, dass die Gewinderille 8 durch einen Rillenboden 9 und Gewindeflanken 10 begrenzt ist, die in Gewindespitzen 11 münden. Die Gewinderille 8 kämmt mit dem mittleren Profilabschnitt 4a der Planeten 3.

Die Spindelmutter 1 ist an einem Gehäuse 12 über zwei Wälzlager 13 drehbar gelagert. Das Gehäuse 12 ist von der Gewindespindel 2 durchdrungen und an einem axialen Ende mit einer Ausnehmung 14 versehen, die koaxial zu der Spindelachse angeordnet ist. In dieser Ausnehmung 14 ist ein Sensorelement 15 einer nicht weiter abgebildeten Messeinrichtung angeordnet, die für eine axiale Positionsbestimmung der Gewindespindel 2 in Bezug auf die Spindelmutter 1 vorgesehen ist. Das Sensorelement 15 ist vorliegend ringförmig ausgebildet, es kann jedoch eine davon abweichende Gestalt aufweisen. Das Sensorelement 15 ist in der Ausnehmung 14 des Gehäuses 12 gehalten. Das Sensorelement 15 und die Spindelmutter 2 sind axial zueinander positioniert.

Das Sensorelement 15 weist im Ausführungsbeispiel zehn Sensoren 16 auf, die entlang der Spindelachse mit axialem Abstand zueinander angeordnet sind. In Figur 3 ist lediglich der erste Sensor 16 und der zehnte Sensor 16 angedeutet. Die Sensoren 16 sind sogenannte magnetoresistive Sensoren, deren elektrischer Widerstand abhängig ist von einem detektierten Magnetfeld. Die Sensoren 16 sind magnetisch über einen als Permanentmagneten ausgeführten Stützmagneten 17 vorgespannt. Wenn einer der Sensoren 16 genau über einer Gewindespitze 11 angeordnet ist, detektiert dieser Sensor einen maximalen magnetischen Fluss. befindet sich der Sensor 16 genau über einem Rillenboden 9, detektiert der Sensor 16 einen minimalen magnetischen Fluss. Der Wechsel zwischen diesen Extremwerten ist sinusförmig.

Bei Planetenwälzgewindetrieben ist der axiale Vorschub zwischen Gewindespindel und Spindelmutter bei einer vollen Umdrehung zwischen Spindelmutter und Gewindespindel nicht übereinstimmend mit der Steigung des Gewindes der Gewindespindel. Aus diesem Grund laufen für einen in Bezug auf die Spindelmutter 2 ortsfesten Beobachter die einzelnen Windungen der Gewinderille 8 erkennbar vorbei. Anders verhält es sich bei einer Schraube-Mutter Verbindung, bei der unter einer vollen Umdrehung der Schraube gegenüber der Mutter ein axialer Vorschub erfolgt, der gerade der Steigung des Schraubengewindes entspricht. Aus diesem Grund stehen für einen in Bezug auf die Spindelmutter 2 ortsfesten Beobachter die Windungen der Schraube still.

Im erfindungsgemäßen Ausführungsbeispiel ist die Gewindespindel drehfest und axial verschieblich gegenüber dem Gehäuse 12 angeordnet. Das Sensorelement 15 ist gehäusefest angeordnet. Für einen in Bezug auf das Gehäuse 12 ortsfesten Beobachter laufen die einzelnen Windungen der Gewinderille 8 erkennbar vorbei.

Das Sensorelement 15 detektiert Änderungen des Magnetfeldes während einer Relativdrehung zwischen Gewindespindel 2 und Spindelmutter 1 und ermöglicht eine genaue axiale Positionsbestimmung der Gewindespindel 2 in Bezug auf die Spindelmutter 1.

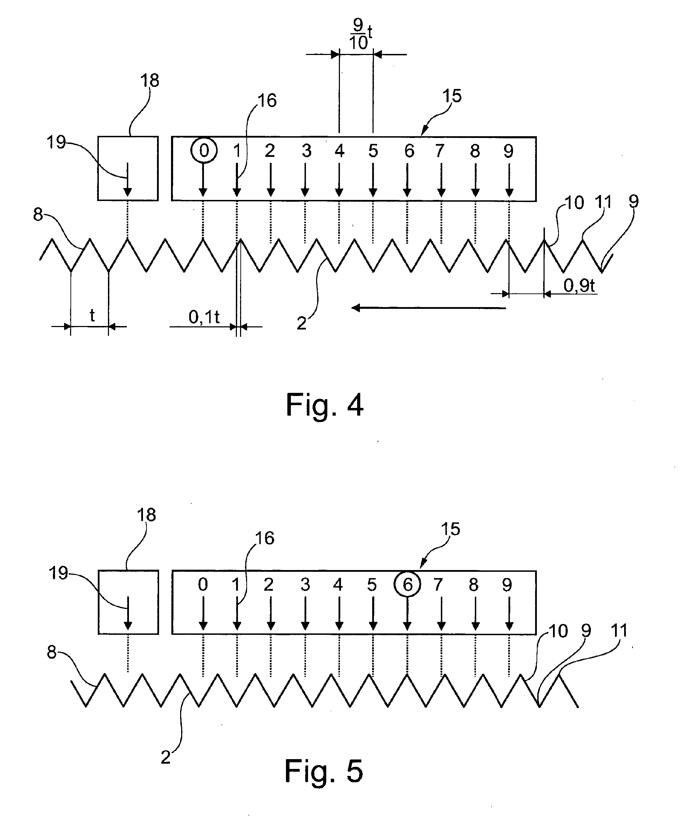

Die Figuren 4 und 5 zeigen das Sensorelement 15 und die Gewindespindel in schematischer Darstellung. Zusätzlich zu dem Ausführungsbeispiel gemäß Figur 1 ist in den Figuren 4 und 5 noch ein Zähler 18 mit einem Sensor 19 vorgesehen, der bei dem Ausführungsbeispiel gemäß Figur 1 in das Sensorelement 15 integriert sein kann.

Figur 4 zeigt die zehn entlang der Gewindespindel 2 angeordneten Sensoren 16 des Sensorelementes 15. Der axiale Abstand zwischen zwei einander benachbarten Sensoren 16 beträgt $\frac{9}{10}t$, wobei "t" die Teilung der Gewinderille 8 ist. Jeder dieser Sensoren 16 repräsentiert eine ganzzahlige Zahl von 0 bis 9, wobei die Ziffern entlang der Spindelachse in aufsteigender Reihe den Sensoren 16 zugeordnet sind.

Bei dieser Anordnung bildet das Sensorelement 15 einen Nonius, der weiter unten näher erläutert wird.

Der Sensor 19 des Zählers 18 detektiert eine Änderung des Magnetfeldes unter einer Relativverschiebung zwischen Gewindespindel und Spindelmutter. Der Zähler wird mit dem Durchlaufen einer jeden Windung der Gewinderille 8 jedes Mal um einen Wert hochgesetzt, und zählt die Anzahl der durchlaufenen Windungen.

Der Darstellung ist zu entnehmen, dass der Zähler-Sensor 19 des Zählers 18 genau über einer der Gewindespitzen 11 der Gewinderille 8 liegt. In dieser Lage zwischen Gewindespindel 2 und Spindelmutter 1 ist der erste Sensor 16 - Null-Sensor - des Sensorelementes 15 ebenfalls genau über einer Gewindespitze 11 angeordnet. Der zweite Sensor 16 - Eins-Sensor - liegt $\frac{1}{10}t$ vor der nächsten Gewindespitze 11. Der dritte Sensor 16 - Drei-Sensor - liegt $\frac{2}{10}t$ vor der folgenden Gewindespitze 11. Schließlich liegt der zehnte Sensor 16 - Zehn-Sensor - $\frac{9}{10}t$ vor der nachfolgenden Gewindespitze 11. In der Darstellung ist der Null-Sensor mit einem Kreis markiert, um ihn als denjenigen Sensor 16 zu identifizieren, der gerade über einer Gewindespitze 11 liegt.

Wird die Gewindespindel 2 gegenüber dem Sensorelement 15 axial in Pfeilrichtung nach links um beispielsweise 4,6 Windungen verschoben, ergibt sich eine Position, in der der Sensor 19 des Zählers 18 vier Gewindespitzen 11 gezählt hat und gerade zwischen zwei einander benachbarten Gewindespitzen 11 bleibt. Um die exakte Position zwischen diesen Gewindespitzen 11 bestimmen zu können liefert das Sensorelement 15 ein entsprechendes Signal. In dem Beispiel liegt aufgrund der Nonius Funktion der Sechs-Sensor 16 gerade über einer Gewindespitze 11. Es liegt eine Verschiebung im Dezimalbereich von 0,6 t vor. Während der Zähler 18 die Windungen zählt, ermittelt das Sensorelement 15 als Nonius die genaue Position innerhalb von zwei einander benachbarten Windungen. In dem Dezimalbereich von 0,1t bis 0,9t ist jedem Sensor 16 eine beliebige der Gewindespitzen 11 zugeordnet. Anstelle einer Gewindespitze 11 kann auch der Rillenboden 9 als Bezugspunkt für die Positionsermittlung dienen. Eine Umrechnung in ein Längenmaß ist in Kenntnis der Teilung t einfach möglich, die als Längenmaß bspw in mm angegeben wird.

Bei einer rückläufigen Bewegung der Gewindespindel 2 kann die Dezimalstelle in der Weise ermittelt werden, dass sie durch den Differenzbetrag des signalgebenden Sensors 16 zum Wert 1t bestimmt ist. Wird beispielsweise die Gewindespindel 2 - ausgehend von der Position gemäß Figur 4 - um 0,3t nach rechts verschoben, liegt der Sieben-Sensor 16 genau über einer Gewindespitze. Die Dezimalstelle gegeben durch den Differenzbetrag 1t-0,7t = 0,3t.

Der Zähler 18 kann auch in das Sensorelement 15 integriert werden. Beispielsweise kann einer der Sensoren 16 - beispielsweise der Null-Sensor - zusätzlich als Zähler-Sensor verwendet werden.

Bei der Initialisierung des Zählers 18 kann eine Referenzfahrt durchgeführt werden, wobei ausgehend von einer Endlage zwischen Gewindespindel und Spindelmutter eine Fahrt bis zu dem anderen Ende durchgeführt wird, wobei der Zähler zu Beginn der Referenzfahrt auf Null gesetzt ist und am Ende der Referenzfahrt einen ganzzahligen Wert anzeigt, der der Anzahl der überfahrenen Windungen entspricht. Auf diese Weise kann eine absolute Position der Gewindespindel 2 gegenüber der Spindelmutter 1 bestimmt werden.

Als Sensorelemente eignen sich alle Sensortypen, die ein Vorbeilaufen von Windungen der Gewindespindel erfassen können. Magnetoresistive Sensoren, insbesondere die magnetisch vorgespannten magnetoresistive Sensoren können Magnetfelder detektieren, wobei ein Magnetfluss abhängig ist von der Lage der Gewindespitzen und der Rillenböden in Bezug auf den Sensor.

**Bezugszeichenliste**

1.    Spindelmutter

2.    Gewindespindel
3.    Planet
4.    planetenseitiges Profil
4a    mittlerer Profilabschnitt
4b    äußerer Profilabschnitt
5.    Zapfen
6.    Mittelstück
7.    mutterseitiges Profil
8.    Gewinderille
9.    Rillenboden
10.    Gewindeflanke
11.    Gewindespitze
12.    Gehäuse
13.    Wälzlager
14.    Ausnehmung
15.    Sensorelement
16.    Sensor
17.    Stützmagnet
18.    Zähler
19.    Zähler-Sensor

**Patentansprüche**

1.    Planetenwälzgewindetrieb, mit einer auf einer Gewindespindel (2) angeordneten Spindelmutter (1), und mit einer Vielzahl von über den Umfang verteilt angeordneten Planeten (3), die in Wälzeingriff mit der Gewindespindel (2) sowie der Spindelmutter (1) stehen, wobei die Gewindespindel (2) eine Vielzahl von schraubenförmig um die Spindelachse gewundene Windungen wenigstens einer Gewinderille (8) aufweist, und wobei ein gegenüber der Spindelmutter (1) axial unverschieblich angeordnetes Sensorelement (15) eine axiale Verlagerung der Gewindespindel (2) und der Spindelmutter (1) zueinander erfasst, **dadurch gekennzeichnet, dass** die Spindelmutter (1) an einem das Sensorelement (15) aufweisenden Gehäuse (12) um die Spindelachse herum drehbar gelagert ist.

2.    Planetenwälzgewindetrieb nach Anspruch 1, bei dem das Gehäuse (12) eine von der Gewindespindel (2) durchdrungene Ausnehmung (14) aufweist, in der das Sensorelement (15) angeordnet ist.

3.    Planetenwälzgewindetrieb nach Anspruch 2, bei dem das koaxial zu der Gewindespindel (2) angeordnete ringförmige Sensorelement (15) in der Ausnehmung (14) angeordnet ist.

4.    Planetenwälzgewindetrieb nach Anspruch 3, bei dem das Sensorelement (15) wenigstens einen magnetoresistiven Sensor (16) aufweist, dessen elektrischer Widerstand sich unter dem Einfluß eines Magnetfeldes ändert.

**Claims**

1.    Planetary spindle drive, with a spindle nut (1) arranged on a threaded spindle (2) and with a multiplicity of planets (3) which are arranged so as to be distributed on the circumference and which are in rolling engagement with the threaded spindle (2) and with the spindle nut (1), the threaded spindle (2) having a multiplicity of turns of at least one thread groove (8) which are wound helically about the spindle axis, and a sensor element (15) arranged axially non-displaceably with respect to the spindle nut (1) detecting an axial displacement of the threaded spindle (2) and of the spindle nut (1) in relation to one another, **characterized in that** the spindle nut (1) is mounted rotatably about the spindle axis in a housing (12) having the sensor element (15).

2.    Planetary spindle drive according to Claim 1, in which the housing (12) has a recess (14) which is penetrated by the threaded spindle (2) and in which the sensor element (15) is arranged.

3.    Planetary spindle drive according to Claim 2, in which the ring-shaped sensor element (15) arranged coaxially to the threaded spindle (2) is arranged in the recess (14).

4.    Planetary spindle drive according to Claim 3, in which the sensor element (15) has at least one magnetoresistive sensor (16), the electrical resistance of which changes under the influence of a magnetic field.

**Revendications**

1.    Entraînement à vis sans fin planétaire, comprenant un écrou de broche (1) disposé sur une broche filetée (2), et comprenant une pluralité de satellites (3) disposés de manière répartie sur la périphérie, qui sont en engagement de roulement avec la broche filetée (2) ainsi que l'écrou de broche (1), la broche filetée (2) présentant une pluralité de spires d'au moins une rainure hélicoïdale (8) enroulées en hélice autour de l'axe de broche, et un élément de capteur (15) disposé de manière axialement immobile par rapport à l'écrou de broche (1) détectant un décalage axial de la broche filetée (2) et de l'écrou de broche (1) l'un par rapport à l'autre, **caractérisé en ce que** l'écrou de broche (1) est monté de manière à pouvoir tourner autour de l'axe de broche au niveau d'un boîtier (12) présentant l'élément de capteur (15).

2.    Entraînement à vis sans fin planétaire selon la revendication 1, dans lequel le boîtier (12) présente un évidement (14) traversé par la broche filetée (2), dans lequel est disposé l'élément de capteur (15).

**3.** Entraînement à vis sans fin planétaire selon la revendication 2, dans lequel l'élément de capteur (15) annulaire disposé coaxialement par rapport à la broche filetée (2) est disposé dans l'évidement (14).

**4.** Entraînement à vis sans fin planétaire selon la revendication 3, dans lequel l'élément de capteur (15) présente au moins un capteur magnéto-résistif (16) dont la résistance électrique varie sous l'influence d'un champ magnétique.

Fig. 1

Fig. 2

Fig. 3

$$\frac{9}{10}t$$

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009040606 A1